Europäisches Patentamt

European Patent Office

Office européen des brevets

(11) Veröffentlichungsnummer: **0 278 026 B1**

(12) **EUROPÄISCHE PATENTSCHRIFT**

(45) Veröffentlichungstag der Patentschrift: 15.05.91

(51) Int. Cl.⁵: **C08F 20/06**

(21) Anmeldenummer: 87101780.2

(22) Anmeldetag: 09.02.87

Die Akte enthält technische Angaben, die nach dem Eingang der Anmeldung eingereicht wurden und die nicht in dieser Patentschrift enthalten sind.

(54) **Verwendung von wasserlöslichen Polymerisaten der Acryl- oder Methacrylsäure als Mahlhilfsmittel für Calziumcarbonat.**

(43) Veröffentlichungstag der Anmeldung:
17.08.88 Patentblatt 88/33

(45) Bekanntmachung des Hinweises auf die Patenterteilung:
15.05.91 Patentblatt 91/20

(84) Benannte Vertragsstaaten:
BE DE FR GB IT NL

(56) Entgegenhaltungen:
EP-A- 0 002 771
EP-A- 0 175 317

Ullmanns Enzyklopädie der Technischen Chemie. 4 Auflage, Band 19 (1980), seite 14

(73) Patentinhaber: BASF Aktiengesellschaft
Carl-Bosch-Strasse 38
W-6700 Ludwigshafen(DE)

(72) Erfinder: Denzinger, Walter
Wormser Landstr. 65
W-6720 Speyer(DE)
Erfinder: Hartmann, Heinrich, Dr.
Weinheimer Str. 46
W-6703 Limburgerhof(DE)
Erfinder: Hirsch, Guenter, Dr.
Ostpreussenstr. 9
W-6704 Mutterstadt(DE)
Erfinder: Becker, Hans-Werner, Dr.
Bürgermeister Horlacher-Str. 46
W-6700 Ludwigshafen(DE)
Erfinder: Rohmann, Michael, Dr.
Heinrich Baermann-Str. 15
W-6702 Bad Dürkheim(DE)

## EP 0 278 026 B1

### Beschreibung

Aus der EP-PS 2771 ist ein Verfahren zur Herstellung von Polymerisaten der Acrylsäure oder Methacrylsäure bekannt, bei dem man Acrylsäure oder Methacrylsäure, gegebenenfalls zusammen mit bis zu 10 Gew.-% einer anderen, damit copolymerisierbaren ethylenisch ungesättigten Verbindung in Isopropanol oder Mischungen aus Isopropanol und Wasser, die mindestens 40 Gew.-% Isopropanol enthalten, in Gegenwart radikalischer Polymerisationinitiatoren bei Temperaturen von 120 bis 200°C unter Druck polymerisiert. Nach diesem Verfahren erhält man in reproduzierbarer Weise auch im großtechnischen Maßstab Polymerisate eines niedrigen Molekulargewichts, die als Dispergiermittel für anorganische Pigmente zur Herstellung von Papierstreichmassen verwendet werden. Obwohl die so hergestellten niedrigmolekularen Polymerisate eine sehr gute Dispergierwirkung für anorganische Pigmente aufweisen, läßt ihre Wirksamkeit als Mahlhilfsmittel zu wünschen übrig.

Aus der EP-A-0 175 317 ist ein Verfahren zur Herstellung von Carboxylgruppen enthaltenden Polymerisaten bekannt, die zumindest in neutralisierter Form wasserlöslich sind, bei dem man monoethylenisch ungesättigte $C_3$- bis $C_5$-Carbonsäuren, gegebenenfalls mit carboxylgruppenfreien copolymerisierbaren ethylenisch ungesättigten Monomeren, in wäßriger Lösung unter Verwendung von Polymerisationsinitiatoren in Gegenwart von 0,01 bis 5 Gew.-%, bezogen auf die Monomeren, an anorganischen Phosphorsäuren, in denen der Phosphor eine Oxidationszahl von 1 bis 4 hat, deren wasserlöslichen Salzen, wasserlöslichen-$PO(OH)_2$-Gruppen enthaltenden Verbindungen und/oder deren wasserlöslichen Salzen polymerisiert. Man erhält nach diesem Verfahren farblose bzw. nur wenig gefärbte wäßrige Polymerisatlösungen. Zur Herstellung niedrigmolekularer Polymerisate verwendet man gemäß den Angaben in der Patentschrift Molekulargewichtsregler, wie Ameisensäure, Hydroxylamin, SH-Gruppen enthaltende Verbindungen, Allylalkohol oder Butenol. Die Polymerisationsregler werden in Mengen bis zu 20 Gew.-%, bezogen auf die Monomeren eingesetzt. Die so erhältlichen niedrigmolekularen Polymerisate der Acrylsäure werden als Dispergiermittel für Papierstreichpigmente eingesetzt.

Der vorliegenden Erfindung liegt die Aufgabe zugrunde, Mahlhilfsmittel für Calciumcarbonat zur Herstellung hochkonzentrierter Pigmentschlämmungen für den Einsatz in Papierstreichmassen zur Verfügung zu stellen.

Die Aufgabe wird erfindungsgemäß gelöst mit der Verwendung von wasserlöslichen Polymerisaten der Acrylsäure oder Methacrylsäure, die durch Polymerisieren von Acrylsäure und/oder Methacrylsäure, gegebenenfalls zusammen mit bis zu 10 Gew.-% einer anderen, damit copolymerisierbaren ethylenisch ungesättigten Verbindung in einem sekundären $C_3$-$C_6$-Alkohol oder Mischungen aus einem sekundären $C_3$- bis $C_6$-Alkohol und Wasser, die mindestens 40 Gew.-% eines sekundären $C_3$- bis $C_6$-Alkohols enthalten, in Gegenwart von radikalischen Polymerisationsinitiatoren in einer Menge von 0,1 bis 5 Gew.-%, bezogen auf die Monomeren, und von 0,01 bis 5 Gew.-%, bezogen auf die eingesetzten Monomeren, an anorganischen Phosphorsäuren, in denen der Phosphor eine Oxidationszahl von 1 bis 4 hat, deren wasserlöslichen Salzen, wasserlöslichen -$PO(OH)_2$-Gruppen enthaltenden Organophosphonsäuren und/oder deren wasserlöslichen Salzen bei Temperaturen von 40 bis 180°C erhältlich sind, als Mahlhilfsmittel für Calciumcarbonat in Mengen von 0,05 bis 1,5 Gew.-%, bezogen auf Calciumcarbonat, zur Herstellung hochkonzentrierter Calciumcarbonatschlämmungen für den Einsatz in Papierstreichmassen.

Zur Herstellung der verwendeten Polymerisate unterwirft man Acrylsäure, Methacrylsäure oder Mischungen aus Acrylsäure und Methacrylsäure der Polymerisation. Mischungen aus Acrylsäure und Methacrylsäure können in jedem beliebigen Verhältnis miteinander copolymerisiert werden. Die Polymerisation von Acrylsäure und/oder Methacrylsäure kann auch in Gegenwart von damit copolymerisierbaren anderen ethylenisch ungesättigten Verbindungen durchgeführt werden. Man verwendet damit hauptsächlich solche Comonomeren, die noch wasserlösliche Polymerisate ergeben. Geeignete mit Acrylsäure und Methacrylsäure copolymerisierbare Comonomere sind beispielsweise Acrylsäure- und Methacrylsäureester, die sich von einwertigen Alkoholen mit 1 bis 8 Kohlenstoffatomen ableiten, Dicarbonsäuren, wie Fumarsäure, Maleinsäure oder Itakonsäure, Halbester oder Diester der genannten Dicarbonsäuren mit einwertigen $C_1$- bis $C_8$-Alkoholen, Acrylnitril, Methacrylnitril, Acrylamid und Methacrylamid. Andere geeignete Comonomere sind beispielsweise Vinylacetat, Vinylpropionat, Vinylbutyrat, 2-Acrylamido-2-Methylpropansulfonsäure, Vinylsulfonsäure, Allylsulfonsäure und Vinylphosphonsäure. Die Comonomeren werden in einer Menge bis zu 10 Gew.-% einpolymerisiert. Im Falle der Verwendung von Comonomeren ist jedoch immer darauf zu achten, daß noch wasserlösliche Copolymerisate erhalten werden. Besonders bevorzugt ist die Herstellung von Homopolymerisaten der Acrylsäure sowie von Copolymerisaten der Acrylsäure mit bis zu 10 Gew.% Vinylphosphorsäure (bevorzugt 2 bis 5 Gew.%) unter den oben angegebenen Bedingungen.

Die Polymerisation wird in einem sekundären $C_3$- bis $C_6$-Alkohol oder in Mischungen der genannten Alkohole und Wasser durchgeführt, wobei die Mischungen dann mindestens 40 Gew.-% eines Alkohols

2

enthalten. Geeignete Alkohole sind Isopropanol, Isobutanol, tert.-Butanol, Isopentanol, Neopentylalkohol, sek.-Hexanol und Cyclohexanol. Besondere Bedeutung als Lösemittel für die Herstellung der Polymerisate kommt den sek.-Alkoholen Isopropanol und sek.-Butanol zu. Die Alkohole können entweder allein oder in Form von Mischungen verwendet werden, wobei jedes beliebige Mischungsverhältnis möglich ist. Technisch besonders von Interesse ist die Polymerisation in Mischungen der genannten Alkohole mit Wasser, wobei diese Mischungen mindestens 40, vorzugsweise 60 bis 80 Gew.-% eines Alkohols oder einer Mischung mehrerer in Betracht kommender Alkohole enthalten.

Die Polymerisation erfolgt in Gegenwart von radikalischen Initiatoren. Es handelt sich hierbei um die üblicherweise eingesetzten Persulfate, Peroxide, Hydroperoxide und Azoverbindungen. Einzelne Beispiele für derartige Initiatoren sind beispielsweise Natrium-, Kalium- und Ammoniumpersulfat, tert.-Butylperpivalat, tert.-Butyl-per-2-ethylhexanoat, tert.-Butylperneodecanoat, Benzoylperoxid, Ditertiärbutylperoxid, tert.-Butylhydroperoxid, 2-Ethylhexylpercarbonat, Wasserstoffperoxid, 2,2-Azobisisobutyronitril, 2,2-Azobis(4'-methoxy-2,4-dimethylvaleronitril), 2,2'-Azobis(2,4-dimethylvaleronitril), Dimethyl-2,2-azobisisobutyrat, 2,2'-Azobis-(2,4,4-trimethylpentan), 2,2'-Azobis(N,N'-dimethylenisobutyramid), Dihydrochlorid, 2,2'-Azobis(2-amidinopropan)dihydrochlorid und 4,4'-Azobis(4-cyanopentancarbonsäure). Außerdem eignen sich zur Herstellung der Polymerisate die bekannten Redoxinitiatoren sowie UV-Initiatoren. Für das Polymerisieren unter Einwirkung von UV-Strahlen setzt man die dafür üblicherweise in Betracht kommenden Fotoinitiatoren bzw. Sensibilisatoren ein. Hierbei handelt es sich beispielsweise um alpha-Ketaldonylalkohole, wie Benzoin und Benzoinether, alpha-substituierte Benzoinverbindungen, wie alpha-Methylolbenzoin und alpha-Methylolbenzoinether, alpha-Methylbenzoin oder alpha-Phenylbenzoin. Auch sogenannte Triplett-Sensibilisatoren, vorzugsweise verwendet man als UV-Initiatoren Benzyldiketale. Als UV-Strahlungsquellen dienen beispielsweise neben energiereichen UV-haltigen Lampen, wie Kohlenbogenlampen, Quecksilberdampflampen, Xenonlampen oder Leuchtstoffröhren auch UV-arme Lichtquellen wie Leuchtstoffröhren mit hohem Blauanteil.

Von den Polymerisationsinitiatoren verwendet man bei der großtechnischen Herstellung der Mahlhilfsmittel und Dispergierhilfsmittel vorzugsweise Wasserstoffperoxid. Für alle Initiatoren gilt, daß sie in einer Menge von 0,1 bis 5, vorzugsweise von 0,5 bis 4 Gew.-%, bezogen auf die Monomeren, eingesetzt werden.

Die Polymerisation wird in Gegenwart von anorganischen Phosphorsäuren, in denen der Phosphor eine Oxidationszahl von 1 bis 4 hat, deren wasserlöslichen Salzen, wasserlöslichen -PO/OH)$_2$-Gruppen enthaltenden Organophoshonsäuren und/oder deren wasserlöslichen Salzen durchgeführt. Als wasserlösliche anorganische Phosphorverbindungen kommen beispielsweise hypophosphorige Säure sowie deren Natrium- und Kaliumsalze, hypodiphosphorige Säure, Natriumhypodiphosphit, phosphorige Säure sowie Mononatriumphosphit und Dinatriumphosphit, diphosphorige Säure und Natriumdiphosphit, hypodiphosphorige Säure und Natriumhypodiphosphit in Betracht. Aus dieser Gruppe von anorganischen Phosphorverbindungen setzt man vorzugsweise phosphorige Säure oder deren Natrium-, Kalium- und Ammoniumsalze ein.

Von den wasserlöslichen -PO(OH)$_2$-Gruppen enthaltenden Organophosphonsäuren seien folgende Verbindungen beispielhaft genannt: Methandiphosphonsäure, Propan-1,2,3-triphosphonsäure, Butan-1,2,3-tetraphosphonsäure, Polyvinylphosphonsäure, 1-Aminoethan-1,1-diphosphonsäure, 1-Amino-1-phenyl-1,1-diphosphonsäure, Aminotrismethylen-triphosphonsäure, Methylamino- oder Ethylaminobismethylendiphosphonsäure, Ethylendiaminotetramethylentetraphosphonsäure, Ethylentriaminopentamethylenpentaphosphonsäure, 1-Hydroxyethan-1,1-diphosphonsäure, Phosphonoessig- und Phosphonopropionsäure und deren Salze, wobei 1-Hydroxy-1,1-diphosphonsäure, sowie deren Dinatrium- und Tetranatriumsalze, Aminotrismethylentriphosphonsäure sowie das Pentanatriumsalz und Ethylendiaminotetramethylentetraphosphonsäure sowie deren Salze bevorzugt sind. Oftmals ist es vorteilhaft, mehrere Phosphorverbindungen zu kombinieren, wie beispielsweise Natriumhypophosphit und phosphorige Säure, phosphorige Säure und 1-Hydroxy-ethyliden-1,1-diphosphonsäure-dinatriumsalz und Aminotrimethylen-triphosphonsäure und 1-Hydroxyethan-1,1-diphosphonsäure. Sie könne in jedem beliebigen Verhältnis miteinander gemischt und bei der Polymerisation eingesetzt werden.

Die zugesetzten Mengen betragen 0,01 bis 5 Gew.-%, berechnet auf eingesetzte Monomere, wobei der Bereich von 0,1 bis 1 Gew.-% besonders bevorzugt ist.

Bei der Herstellung wäßriger Lösungen von Homopolymerisaten verfährt man im allgemeinen so, daß man Wasser und eine geringe Menge des Monomeren (2 bis 5 % der Monomermenge, die insgesamt polymerisiert werden soll) im Reaktor vorlegt, mit Stickstoff spült und den Reaktorinhalt auf die gewünschte Polymerisationstemperatur erhitzt. Anschließend gibt man die restliche Menge des Monomeren zusammen mit dem Initiator, gelöst in Wasser und/oder einem Alkohol über einen Zeitraum von 1 bis 10 Stunden, vorzugsweise innerhalb von 2 bis 8 Stunden dem Reaktor zu. Die Phosphorverbindungen werden vorzugsweise im Reaktor vorgelegt, können jedoch auch in der wäßrigen Monomerlösung oder separat davon dem Reaktor zugeführt werden. In einigen Fällen ist es von Vorteil, wenn etwa 10 % der Phosphorverbindungen im Reaktor vorgelegt und der Rest kontinuierlich mit den Monomeren zugegeben wird.

Die Polymerisationstemperatur beträgt 40 bis 180°C. Sofern Temperaturen für die Polymerisation gewählt werden, die oberhalb des Siedepunktes des jeweils eingesetzten Alkohols liegen, wird die Polymerisation unter Druck durchgeführt. Polymerisate mit besonders vorteilhaften Eigenschaften werden erhalten, wenn man die Polymerisation bei 90 bis 130°C unter Druck vornimmt. Die Polymerisation kann sowohl diskontinuierlich als auch kontinuierlichdurchgeführt werden. Die Polymerisation kann auch in der Weise erfolgen, daß man die zu polymerisierenden Monomeren, Lösemittel, Initiator und eine der oben beschriebenen Phosphorverbindungen vorlegt und - vorzugsweise unter einer Stickstoffatmosphäre - mit UV-Licht bestrahlt. Beim Polymerisieren unter Einwirkung von UV-Strahlen liegt die Polymerisationstemperatur in dem Bereich von 40 bis 90°C. Man kann bei der Polymerisation der Acrylsäure bzw. Methacrylsäure auch einen Teil des in Betracht kommenden Alkohols vorlegen, auf die Polymerisationstemperatur erhitzen, anschließend Acrylsäure oder Methacrylsäure, Initiator und weitere Lösemittel zudosieren. Die in Betracht kommenden Phosphorverbindungen werden vorzugsweise vorgelegt oder kontinuierlich oder absatzweise dem Polymerisationsreaktor zugeführt.

Die Polymerisation wird in der Regel so durchgeführt, daß man zunächst erst einen Teil der Acrylsäure und einer Mischung aus Wasser und Isopropanol oder sek.-Butanol sowie Polymerisationsinitiator vorlegt, das Reaktionsgemisch dann unter Druck auf eine Temperatur in dem Bereich von 90 bis 130°C erwärmt und die Polymerisation startet. Dann fügt man entweder kontinuierlich oder chargenweise Lösemittel, Acrylsäure und Polymerisationsinitiator und gegebenenfalls eine der in Betracht kommende Phosphorverbindungen hinzu, falls diese nicht bereits im Polymerisationsreaktor vorgelegt wurden. Der Druck bei der Polymerisation ist abhängig von der jeweils gewählten Reaktionstemperatur. Der Druck liegt etwa zwischen 2 und 20, vorzugsweise 2 und 5 bar, kann jedoch auch in einigen Fällen darunter oder darüber liegen.

Nachdem man die gesamte Monomerenmischung dem Polymerisationsgefäß zugeführt hat, erhitzt man das Reaktionsgemisch noch 2 bis 3 Stunden auf eine Temperatur in dem Bereich von 90 bis 130°C, senkt dann den Druck im Polymerisationsgefäß ab, wobei gleichzeitig eine Mischung aus Wasser und Isopropanol bzw. sek.-Butanol abdestilliert. Isopropanol bzw. sek.-Butanol und Wasser werden entweder bei Normaldruck oder vorzugsweise im Vakuum aus dem Reaktionsgemisch entfernt. Die Destillation wird abgebrochen, sobald kein oder nur noch sehr wenig Isopropanol bzw. sek.-Butanol im Reaktionsgemisch vorhanden ist. Vorteilhafterweise entspannt man nach Reaktionsende langsam bis zur Einstellung atmosphärischen Drucks, wobei ein Großteil des Isopropanol-Wassergemisches bzw. sek.-Butanol-Wassergemisches bereits abdestilliert. Anschließend vermindert man den Druck im Reaktionsbehälter langsam unter weiterem Rühren bis der Hauptteil an sekundären Alkoholen zusammen mit Wasser übergetreten ist. Dann fügt man zum Rückstand Wasser und anschließend wäßrige Natronlauge hinzu und erhält so eine wäßrige Lösung eines Natriumpolyacrylats bzw. Natriumpolymethacrylats. Anstelle von Natronlauge kann man auch Kalilauge oder Ammoniak bzw. Amine verwenden. Der pH-Wert der Lösung des Polyacrylats wird in der Regel auf 8,0 auf 9,0 eingestellt.

Die Konzentrationen an Monomeren im Lösemittel werden so gewählt, daß man Polymerlösungen mit einem Polymergehalt von 5 bis 70, vorzugsweise 10 bis 60 Gew.-% erhält. Bei niedrigen Polymerisationstemperaturen werden vorzugsweise Polymerlösungen einer niedrigeren Konzentration hergestellt, während man hochkonzentrierte Polymerlösungen bei höheren Polymerisationstemperaturen produziert. Die nach dem erfindungsgemäßen Verfahren hergestellten Polymerisate haben einen K-Wert nach H. Fikentscher von 15 bis 50, vorzugsweise 18 bis 40 (gemessen bei 25°C in 1%iger wäßriger Lösung als Natriumsalz bei einem pH-Wert von 8,5).

Die Copolymerisate werden als Mahlhilfsmittel für Calciumcarbonat-Pigment zur Herstellung von Papierstreichmassen verwendet. Hierfür benötigt man nämlich hochkonzentrierte wäßrige Pigmentanschlämmungen. Die Einsatzmengen der Polymerisate betragen, bezogen auf Pigment, 0,05 bis 1,5, vorzugsweise ein solches 0,3 bis 0,7 Gew.-%. Als $CaCO_3$-Pigment zur Herstellung von Papierstreichmassen kommt hauptsächlich Kreide in Betracht. Aus diesem Pigment für die Papierstreicherei werden hochkonzentrierte wäßrige Anschlämmungen hergestellt, die in Abhängigkeit von der Art des Pigments und dessen Teilchengröße Feststoffgehalte zum Teil bis zu 90 Gew.-% haben können. Bei Kreide beträgt der Feststoffgehalt der wäßrigen Anschlämmungen 75 bis 85 Gew.-%, teilweise sogar bis zu 90 Gew.-%, besonders dann, wenn es sich um Pigmente mit einem breiten Teilchengrößenspektrum handelt. Die üblichen Streichpigmente, die aus natürlichen Lagerstätten stammen, wie Kaolinite, Calciumcarbonate, Talkum und Gips, jedoch auch Weißpigmente aus chemischen Prozessen, müssen häufig gemahlen und dispergiert werden, um die geforderte Teilchenfeinheit für Papierstreichmassen zu besitzen. Dieses gilt insbesondere für Calciumcarbonate.

Die wäßrigen Pigmentanschlämmungen werden erfindungsgemäß dadurch hergestellt, daß man die nach dem oben beschriebenen Verfahren hergestellten Polymerisate bereits beim Mahlen als Mahlhilfsmittel für die $CaCo_3$-Pigmente zusetzt. Dieser Mahlvorgang wird bekanntlich in wäßrigem Medium durchgeführt.

EP 0 278 026 B1

Kreide wird beispielsweise zu 90 % auf eine Teilchengröße von kleiner 2 µm gemahlen. Die Mahlhilfsmittel werden in der gleichen Menge verwendet wie die Dispergiermittel zur Herstellung von Papierstreichmassen. Zum Mahlen und Dispergieren von Kreide benötigt man vorzugsweise 0,3 bis 0,7 Gew.-% der oben beschriebenen Polymerisate. Bei der Herstellung wäßriger Anschlämmungen von Kreide zeigen bereits geringe Mengen des erfindungsgemäß hergestellten Polymerisats eine auffallend bessere Dispergierbarkeit als die bisher für diesen Zweck verwendeten handelsüblichen Produkte, die in Abwesenheit der oben beschriebenen Phosphorverbindungen hergestellt werden. Unter hochkonzentrierten wäßrigen Pigmentanschlämmungen sollen solche Mischungen verstanden werden, bei denen der Pigmentgehalt mindestens 65 Gew.-% beträgt. Die in den Beispielen angegebenen Teile sind Gew.-Teile, die Angaben in Prozent beziehen sich auf das Gewicht der Stoffe. Die K-Werte wurden nach H. Fikentscher, Cellulose Chemie 13, 48 bis 64 und 71 bis 74 (1932) in 1%iger wäßriger Lösung bei einer Temperatur von 25° C und einem pH-Wert von 8,5 gemessen; dabei bedeutet K = k.10³.

Die Viskosität der wäßrigen Pigmentanschlämmungen wurde mit einem Brookfield-Viskosimeter bei einer Temperatur von 20° C und 100 Upm unter Verwendung der Spindel IV bestimmt.

## Beispiel 1

In einem 6 l fassenden Druckbehälter, der mit einem Rührer und einem Heizmantel sowie Vorrichtungen zum Dosieren und Abdestillieren versehen ist, werden 1048 g einer 65%igen wäßrigen Isopropanollösung, 59 g 30%iges Wasserstoffperoxid und 19 g einer 50%igen wäßrigen Lösung von phosphoriger Säure vorgelegt, gut mit Stickstoff gespült und nach dem Verschließen des Druckbehälters darin auf 118° C erhitzt, wobei sich ein Druck von 3,2 bar einstellt. Sobald der Inhalt des Druckbehälters eine Temperatur von 118° C erreicht hat, gibt man innerhalb von 3 Stunden eine Lösung von 1895 g Acrylsäure und 908 g eines Gemisches aus Wasser und Isopropanol zu, das 65 % Isopropanol enthält, und separat davon innerhalb eines Zeitraums von 4 Stunden 100 g 30%iges Wasserstoffperoxid. Nach beendeter Zugabe der Wasserstoffperoxidlösung hält man die Temperatur des Reaktionsgemisches noch 2 Stunden bei 118° C. Danach wird es nach 100° C abgekühlt und entspannt, so daß ein Isopropanol-Wassergemisch abdestilliert. Man leitet danach Wasserdampf in das Reaktionsgemisch ein, um das Isopropanol möglichst vollständig abzudestillieren. Sobald das gesamte Isopropanol abdestilliert ist, wird das Reaktionsgemisch auf 60° C abgekühlt und durch Zugabe von 50%iger wäßriger Natronlauge auf einen pH-Wert von 8,5 eingestellt. Man erhält auf diese Weise eine wäßrige Lösung von Natriumpolyacrylat mit einem Feststoffgehalt von 45 %. Der K-Wert des Polymeren beträgt 26,6.

## Beispiel 2

Man verfährt wie im Beispiel 1 angegeben, setzt jedoch anstelle von 19 g jetzt 11,4 g einer 50%igen wäßrigen phosphorigen Säure ein und dosiert die Acrylsäure innerhalb eines Zeitraums von 5 Stunden und die 30%ige wäßrige Wasserstoffperoxidlösung innerhalb von 7 Stunden. Man erhält dann eine 45%ige wäßrige Natriumpolyacrylatlösung, dessen Polymerisat einen K-Wert von 24,4 hat.

## Beispiel 3

In einem 2-l-Glaskolben aus Quarzglas, der mit einem Rührer, Thermometer und einem Rückflußkühler versehen ist, werden 750 g Isopropanol, 190 g Acrylsäure, 1,9 g einer 50%igen wäßrigen Lösung von phosphoriger Säure und 1,9 g Benzyldiketal mit einer energiereichen UV-haltiges Licht abgebenden Lampe (Quecksilberdampflampe) bestrahlt. Nach einer Bestrahlungsdauer von etwa 1/4 Stunde erwärmt sich das Reaktionsgemisch bis zum Sieden auf ca. 82° C. Die Bestrahlung wird 7 Stunden lang fortgesetzt, wobei durch gelegentliches Kühlen des Kolbens in einem Wasserbad dafür gesorgt wird, daß die Reaktion nicht zu heftig verläuft. Anschließend wird die UV-Lampe abgestellt und das Reaktionsgemisch dadurch aufgearbeitet, daß man Wasserdampf einleitet, um das Isopropanol aus dem Reaktionsgemisch abzudestillieren. Nach dem Verdünnen des Reaktionsgemisches mit Wasser wird die gebildete Polyacrylsäure mit 50%iger wäßriger Natronlauge bis zu einem pH-Wert von 8,3 neutralisiert. Der Feststoffgehalt der wäßrigen Lösung von Natriumpolyacrylat beträgt 47 %. Das Natriumpolyacrylat hat einen K-Wert von 32,5.

5

Beispiel 4

Beispiel 1 wird mit der Ausnahme wiederholt, daß man anstelle einer 65%igen wäßrigen Isopropanollösung eine Mischung aus sek.-Butanol und Wasser einsetzt, die 85 % sek.-Butanol enthält. Es resultiert eine wäßrige Natriumpolyacrylatlösung mit einem Feststoffgehalt von 45 % und einem K-Wert des Polymeren von 28,2.

Vergleichsbeispiel 1 (Analog Beispiel 1 der EP-PS 2771)

In einem 15-1-fassenden Druckbehälter, der mit einem Rührer und einem Heizmantel sowie Vorrichtungen zum Dosieren und Abdestillieren versehen ist, werden 1600 g 58%iges wäßriges Isopropanol sowie 96 g 50%iges Wasserstoffperoxid vorgelegt. Der Druckbehälter wird verschlossen und das darin befindliche Gemisch auf eine Temperatur auf 130° C erhitzt. Der Druck beträgt 4 bar. Nach Erreichen einer Temperatur von 130° C wird innerhalb von 6 Stunden eine Mischung aus 5000 g Acrylsäure und 3700 g 58%igem wäßrigen Isopropanol und innerhalb von 8 Stunden mit Hilfe einer separaten Dosiervorrichtung 200 g 50%iges Wasserstoffperoxid zugeführt. Nach Zugabe des Wasserstoffperoxids wird das Reaktionsgemisch noch 2 Stunden auf einer Temperatur von 130° C gehalten, danach auf 100° C abgekühlt und durch Einleiten von Wasserdampf das Isopropanol abdestilliert. Durch Zugabe von Wasser und wäßrigr Natronlauge erhält man eine gebrauchsfertige Lösung eines Natriumpolyacrylats mit einem pH-Wert von 8,5. Die Lösung enthält 45 % Natriumpolyacrylat, der K-Wert des Polymeren beträgt 19,6.

Vergleichsbeispiel 2 (Gemäß US-PS 3,787,488)

In einem 6-1-fassenden Druckbehälter, der mit einem Rührer und einem Heizmantel sowie Vorrichtungen zum Dosieren versehen ist, werden 1040 g vollentsalztes Wasser und 50 g Acrylsäure vorgelegt und in einem schwachen Stickstoffstrom auf 80° C erhitzt. Man bereitet 2 verschiedene Zuläufe, von denen der erste Zulauf auf 2000 g Acrylsäure, 205 g 2-Mercaptoethanol und 250 g Wasser besteht und der zweite Zulauf aus einer Lösung aus 60 g Ammoniompersulfat in 300 g Wasser. Beide Zuläufe werden getrennt voneinander innerhalb von 4 Stunden zum Reaktorinhalt gegeben. Die Polymerisation wird während dieser Zeit bei 80° C durchgeführt und nach Beendigung der Zugabe der Monomeren und des Initiators noch 1,5 Stunden bei einer Temperatur von 100° C nachpolymerisiert, dann auf 60° C abgekühlt und mit 1350 g einer 50%igen wäßrigen Natronlauge neutralisiert. Der K-Wert des Natriumpolyacrylats beträgt 18.

Anwendungstechnische Beispiele

Beispiel 5

Um die Wirksamkeit der Polymeren zu testen, die nach den Beispielen 1 bis 4 und dem Vergleichsbeispielen 1 und 2 hergestellt wurden, wurde ihre Eignung als Mahlhilfsmittel getestet.
Folgendes Testverfahren wurde dafür gewählt:
Ein Gemisch aus 300 g Calciumcarbonat, 100 g Wasser und 1,5 g des zu untersuchenden Mahlhilfsmittels (es wurden jeweils die oben beschriebenen Natriumpolyacrylate eingesetzt, wobei sich die Mengenangaben auf den Feststoffgehalt der Polymerlösung beziehen) werden 60 Minuten lang in einer Kugelmühle (z.B. Netzsch-Mühle PE 5) mit einem Kugelanteil von 170 Gew.-%, bezogen auf die gesamte Pigmentanschlämmung bei 2000 Upm gemahlen. Anschließend werden 0,3 g Mahlhilfsmittel zu dem Ansatz nachdosiert und die Mischung wird danach weitere 30 Minuten gemahlen. Dann setzt man 28 g Wasser zu und trennt die so erhaltene fertige Pigmentanschlämmung von den Kugeln ab. Man bestimmt dann die Viskosität der so erhaltenen 70%igen Pigmentanschlämmung sowie die Teilchengrößen der Pigmente. Die Teilchengrößen werden in Prozent kleiner 2 $\mu$m und kleiner 1 $\mu$m mit Hilfe der üblichen Methoden bestimmt (Sedigraph, Joice-Löbel-Scheibenzentrifuge). Die jeweils ermittelten Teilchengrößen und Viskositäten bei Einsatz der nach den Beispielen und Vergleichsbeispielen erhaltenen Polymerisate als Mahlhilfsmittel sind in der Tabelle angegeben.

## Tabelle

### Charakterisierung der Pigmentanschlämmung

| Mahlhilfsmittel Polymerisat hergestellt nach Beispiel | Teilchengröße | | Viskosität nach Brookfield bei 100 Upm/Spindel IV [mPas] |
|---|---|---|---|
| | % $<$ 1 μm | % $<$ 2 μm | |
| 1 | 82,0 | 97,2 | 1 800 |
| 2 | 82,3 | 94,5 | 2 250 |
| 3 | 81,8 | 97,3 | 2 300 |
| 4 | 82,2 | 95,0 | 2 100 |
| Vergl.-Beisp. 1 | 82,0 | 94,5 | 4 500 |
| Vergl.-Beisp. 2 | 81,8 | 94,0 | 5 700 |

Bei einer Teilchengröße der Pigmentanschlämmungen um 82 % kleiner 1 μm und 94 bis 97 % kleiner 2 μm erzielt man mit den erfindungsgemäß hergestellten Produkten Viskositäten der jeweils 70%igen Calciumcarbonat anschlämmungen um 2000 mPas, während mit dem gemäß den Vergleichsbeispielen 1 und 2 erhaltenen Polymerisate Viskositäten der Pigmentanschlämmungen von über 4000 mPas resultieren.

Verkürzt man bei Einsatz des Polymeren gemäß Vergleichsbeispiel 1 erhaltenen Produkts die Mahldauer soweit, daß die Pigmentanschlämmung eine Viskosität um ca. 1800 mPas besitzt, so werden qualitativ schlechtere, nämlich grobteilige Pigmentanschlämmungen erhalten: 74,5 % kleiner 1 μm sowie 89,8 % kleiner 2μm. Die nach dem oben beschriebenen Verfahren hergestellte Produkte zeigen außer als Mahlhilfsmittel auch bei der üblichen Dispergierung aller üblichen Papierstreichpigmente eine sehr gute Wirksamkeit. Sie sind somit sowohl als Mahlhilfsmittel sowie als auch Dispergiermittel für Pigmente einsetzbar.

## Ansprüche

1. Verwendung von wasserlöslichen Polymerisaten der Acrylsäure oder Methacrylsäure, die durch Polymerisieren von Acrylsäure und/oder Methacrylsäure, gegebenenfalls zusammen mit bis zu 10 Gew.-% einer anderen, damit copolymerisierbaren ethylenisch ungesättigten Verbindung in einem sekundären $C_3$-$C_6$-Alkohol oder Mischungen aus einem sekundären $C_3$- bis $C_6$-Alkohol und Wasser, die mindestens 40 Gew.-% eines sekundären $C_3$- bis $C_6$-Alkohols enthalten, in Gegenwart von radikalischen Polymerisationsinitiatoren in einer Menge von 0,1 bis 5 Gew.-%, bezogen auf die Monomeren, und von 0,01 bis 5 Gew.-%, bezogen auf die eingesetzten Monomeren, an anorganischen Phosphorsäuren, in denen der Phosphor eine Oxidationszahl von 1 bis 4 hat, deren wasserlöslichen Salzen, wasserlöslichen -PO(OH)-$_2$-Gruppen enthaltenden Organophosphonsäuren und/oder deren wasserlöslichen Salzen bei Temperaturen von 40 bis 180°C erhältlich sind,
als Mahlhilfsmittel für Calciumcarbonat in Mengen von 0,05 bis 1,5 Gew.-%, bezogen auf Calciumcarbonat, zur Herstellung hochkonzentrierter Calciumcarbonatanschlämmungen für den Einsatz in Papierstreichmassen.

## Claims

1. Use of a water-soluble polymer of acrylic acid or methacrylic acid obtainable by polymerizing acrylic acid or methacrylic acid, if desired together with up to 10% by weight of another ethylenically unsaturated compound copolymerizable therewith, at 40-180°C in a secondary $C_3$-$C_6$-alcohol or a mixture thereof with water with a secondary $C_3$-$C_6$-alcohol content of not less than 40% by weight in the presence of a free radical polymerization initiator in an amount of from 0.1 to 5% by weight, based on the monomers, and of from 0.01 to 5% by weight, based on the monomers used, of an inorganic acid of phosphorus in which the phosphorus has an oxidation number of from 1 to 4, a water-soluble salt thereof, a water-soluble -PO(OH)$_2$-containing organophosphonic acid and/or a water-soluble salt thereof, as a milling aid for calcium carbonate in amounts of from 0.05 to 1.5% by weight, based on the calcium carbonate, for the production of highly concentrated calcium carbonate slurries for use in paper-coating compositions.

**Revendications**

1. Utilisation de polymères solubles dans l'eau de l'acide acrylique ou de l'acide méthacrylique, que l'on peut obtenir par la polymérisation de l'acide acrylique ou de l'acide méthacrylique, éventuellement avec jusqu'à 10% en poids d'un autre composé à insaturation éthylénique, dans un alcool secondaire en $C_3$ à $C_6$ ou des mélanges d'un alcool secondaire en $C_3$ à $C_6$ et d'eau, qui contiennent au moins 40% en poids d'un alcool secondaire en $C_3$ à $C_6$, en présence d'amorceurs de polymérisation radicalaires en une proportion de 0,1 à 5% en poids par rapport aux monomères et de 0,01 à 5% en poids, par rapport aux monomères mis en oeuvre, d'acides phosphoriques inorganiques dont le phosphore possède un indice d'oxydation de 1 à 4, de leurs sels hydrosolubles, d'acides organophosphoniques contenant de radicaux $-PO(OH)_2-$, hydrosolubles et/ou de leurs sels hydrosolubles, à des températures de 40 à 180°C,
à titre d'adjuvants de mouture pour le carbonate de calcium, en proportions de 0,05 à 1,5% en poids, par rapport au carbonate de calcium, en vue de préparation de suspensions ou boues fortement concentrées en carbonate de calcium à utiliser dans des sauces de couchage du papier.